# EUROPÄISCHE PATENTSCHRIFT

(11) **EP 2 716 946 B1**
(45) Veröffentlichungstag und Bekanntmachung des Hinweises auf die Patenterteilung: **17.09.2014**
(21) Anmeldenummer: 12006846.5
(22) Anmeldetag: 02.10.2012
(51) Int. Cl.: F16K 11/02, F16K 11/044, F16K 31/06

(54) **Ventileinrichtung und Verfahren zu ihrer Herstellung**
Valve device and method for its production
Dispositif de soupape et son procédé de fabrication

(43) Veröffentlichungstag der Anmeldung: 09.04.2014
(73) Patentinhaber: FESTO AG & Co. KG, 73734 Esslingen (DE)
(72) Erfinder: Brenner, Jakob, 73734 Esslingen (DE)
(74) Vertreter: Abel, Martin

(56) Entgegenhaltungen:
- DE-A1- 2 826 212
- DE-A1- 4 000 071
- DE-A1- 4 117 958
- DE-A1-102007 053 503
- DE-C1- 19 516 885

## Beschreibung

Die Erfindung betrifft eine Ventileinrichtung, mit einem Ventilgehäuse, in dem ein unter Ausführung einer linearen Umschaltbewegung in einer axialen Richtung zwischen einer ersten und einer zweiten Schaltstellung umschaltbares Ventilglied angeordnet ist, das einen koaxial auf einem Antriebsabschnitt des Ventilgliedes angeordneten ringförmigen Verschlussabschnitt mit zwei an einander entgegengesetzten Stirnseiten angeordneten und voneinander wegweisenden ersten und zweiten Abdichtabschnitten aufweist, der in der ersten Schaltstellung mit dem ersten Abdichtabschnitt an einem kragenförmigen, bezüglich des Ventilgehäuses ortsfesten ersten Ventilsitz anliegt und der in einer zweiten Schaltstellung mit dem zweiten Abdichtabschnitt an einem dem ersten Ventilsitz mit axialem Abstand gegenüberliegenden, bezüglich des Ventilgehäuses ortsfesten, kragenförmigen zweiten Ventilsitz anliegt, und mit einer zum Hervorrufen der Umschaltbewegung dienenden Elektromagneteinrichtung mit einer bezüglich des Ventilgehäuses ortsfesten, eine bestrombare Spuleneinrichtung enthaltenden Steuereinheit und einem diesbezüglich axial beweglichen, als Bestandteil des Antriebsabschnittes des Ventilgliedes ausgebildeten Ankerelement, wobei, der Verschlussabschnitt des Ventilgliedes einen starren, ringförmigen Grundkörper aufweist, der die beiden Abdichtabschnitte trägt, die gummielastisch verformbar ausgebildet sind.

Die Erfindung betrifft ferner ein Verfahren zur Herstellung einer Ventileinrichtung, die ein Ventilgehäuse aufweist, in dem ein unter Ausführung einer linearen Umschaltbewegung in einer axialen Richtung zwischen einer ersten und einer zweiten Schaltstellung umschaltbares Ventilglied angeordnet ist, das einen koaxial auf einem Antriebsabschnitt des Ventilgliedes angeordneten ringförmigen Verschlussabschnitt mit zwei an einander entgegengesetzten Stirnseiten angeordneten und voneinander wegweisenden ersten und zweiten Abdichtabschnitten aufweist, der in der ersten Schaltstellung mit dem ersten Abdichtabschnitt an einem kragenförmigen, bezüglich des Ventilgehäuses ortsfesten ersten Ventilsitz anliegt und in einer zweiten Schaltstellung mit dem zweiten Abdichtabschnitt an einem dem ersten Ventilsitz mit axialem Abstand gegenüberliegenden, bezüglich des Ventilgehäuses ortsfesten, kragenförmigen zweiten Ventilsitz anliegt, und die eine zum Hervorrufen der Umschaltbewegung dienende Elektromagneteinrichtung mit einer bezüglich des Ventilgehäuses ortsfesten, eine bestrombare Spuleneinrichtung enthaltenden Steuereinheit und einem diesbezüglich axial beweglichen, als Bestandteil des Antriebsabschnittes des Ventilgliedes ausgebildeten Ankerelement aufweist, mit dem folgenden Verfahrensschritt:
(a) Bereitstellen eines Verschlussabschnittes, der einen die beiden Abdichtabschnitte tragenden starren, ringförmigen Grundkörper aufweist, wobei die Abdichtabschnitte gummielastisch verformbar ausgebildet sind.

Eine aus der DE 10 2007 053 503 A1 bekannte Ventileinrichtung der oben genannten Art enthält ein Ventilgehäuse und ein darin axial bewegbar angeordnetes Ventilglied, wobei das Ventilglied einen aus zwei tellerförmigen Körpern bestehenden ringförmigen Verschlussabschnitt aufweist, der auf einem Antriebsabschnitt sitzt, der mittels einer Elektromagneteinrichtung zu einer linearen Umschaltbewegung antreibbar ist. Zu der Elektromagneteinrichtung gehört ein als Bestandteil des Antriebsabschnittes ausgebildetes Ankerelement, das bei Aktivierung der Elektromagneteinrichtung angezogen wird. Je nach Schaltstellung liegt der Verschlussabschnitt entweder mit einem ersten Abdichtabschnitt an einem kragenförmigen ersten Ventilsitz an oder mit einem zweiten Abdichtabschnitt an einem kragenförmigen zweiten Ventilsitz. Beide Ventilsitze sind ortsfest bezüglich des Gehäuses ausgebildet, wobei der zweite Ventilsitz ein einstückiger Bestandteil des Ventilgehäuses ist. Der zweite Ventilsitz gehört zu einem hülsenförmigen Ventilträger, der axial verstellbar ist, um den Umschalthub zwischen den beiden Schaltstellungen justieren zu können.

Damit die Ventileinrichtung auch bei schnellen Umschaltvorgängen keinem erhöhten Verschleiß unterliegt, sollte das Ankerelement zu keiner Zeit an der Steuereinheit der Elektromagneteinrichtung anstoßen. Die zweite Schließstellung sollte also erreicht sein, bevor das Ankerelement mit der Steuereinheit in Kontakt tritt. Andererseits sollte zu Gunsten hoher Umschaltkräfte der zwischen dem Ankerelement und der Steuereinheit vorhandene Luftspalt möglichst klein sein. Um diese Voraussetzungen zu erfüllen, bedarf es einer sehr aufwendigen mechanischen Bearbeitung des Ventilgehäuses, was hohe Herstellungskosten der Ventileinrichtung zur Folge hat.

Aus der DE 19922089 A1 ist ein bistabiles elektromagnetisches Ventil bekannt, das über einen zwischen zwei Endstellungen verschiebbaren Ventilkörper verfügt, der als Magnetanker ausgebildet ist.

Die DE 10307060 A1 offenbart ein Ventil, bei dem außerhalb eines ringförmigen Ventilsitzes eine Anschlagfläche und zwischen dem Ventilsitz und der Anschlagfläche eine Vertiefung zur Aufnahme von durch den Anpressdruck auf den Ventilsitz verformtes Dichtmaterial vorgesehen ist.

Ein Ventil dieser Art is auch aus der Druckschrift DE 4000071 bereits bekannt.

Der Erfindung liegt die Aufgabe zugrunde, Maßnahmen vorzuschlagen, die eine kostengünstige Herstellung einer Ventileinrichtung der eingangs genannten Art ermöglichen.

Zur Lösung dieser Aufgabe ist bei einer Ventileinrichtung der eingangs genannten Art vorgesehen, dass der Verschlussabschnitt mit seinem Grundkörper im Presssitz auf dem Antriebsabschnitt befestigt ist und dabei bezüglich des Antriebsabschnittes eine derartige axiale Relativposition einnimmt, dass bei Anlage des Ankerelementes an der Steuereinheit der Elektromagneteinrichtung gleichzeitig der Grundkörper des Verschlussabschnittes mit einer an der den zweiten Abdichtabschnitt aufweisenden Stirnseite ausgebildeten, axial orientierten Anschlagfläche am Ventilgehäuse anliegt und der kragenförmige zweite Ventilsitz in den gummielastisch verformbaren zweiten Abdichtabschnitt eingedrückt ist.

Die Aufgabe wird ferner bei einem Verfahren der eingangs genannten Art durch die folgenden Verfahrensschnitte gelöst:
(b) koaxiales Aufpressen des Verschlussabschnittes mit seinem Grundkörper auf den Antriebsabschnitt mittels einer Aufpresskraft in einem Zustand, in dem sich der Antriebsabschnitt mit seinem Ankerelement an der Steuereinheit axial unbeweglich abstützt,
(c) Beenden des Aufpressvorganges, wenn der Grundkörper bezüglich des sich an der Steuereinheit axial unbeweglich abstützenden Antriebsabschnittes eine axiale Relativposition einnimmt, in der er mit einer Anschlagfläche, die an der den zweiten Abdichtabschnitt aufweisenden Stirnseite ausgebildet ist, am Ventilgehäuse anliegt und außerdem der kragenförmige zweite Ventilsitz in den gummielastisch verformbaren zweiten Abdichtabschnitt eingedrückt ist, und
(d) Wegnehmen der Aufpresskraft, so dass sich das Ventilglied unter Einfluss der Elastizität des zweiten Abdichtabschnittes in Richtung der ersten Schaltstellung bewegt und sich dabei der Antriebsabschnitt von der Steuereinheit entfernt.

Auf diese Weise kann mit einfachen Mitteln gewährleistet werden, dass im Betrieb der Ventileinrichtung das Ankerelement in der zweiten Schaltstellung des Verschlussabschnittes nicht an der Steuereinheit anliegt, der axiale Abstand und mithin der Luftspalt zwischen dem Ankerelement und der Steuereinheit jedoch sehr klein ist. Auf diese Weise kann ein Aufprall des Ankerelementes auf der Steuereinheit im Betrieb der Ventileinheit vermieden werden und es kann gleichwohl eine hohe magnetische Umschaltkraft gewährleistet werden.

Bei der Herstellung der Ventileinrichtung wird der Verschlussabschnitt mit seinem ringförmigen Grundkörper axial auf den Antriebsabschnitt aufgepresst, wobei sich der Antriebsabschnitt während des Aufpressvorganges mit seinem Ankerelement an der Steuereinheit abstützt. Bei diesem Aufpressen wird der zweite Ventilsitz in den elastisch nachgiebigen zweiten Abdichtabschnitt eingedrückt. Der Aufpressvorgang endet, wenn der Grundkörper mit seiner Anschlagfläche am Ventilgehäuse zur Anlage gelangt. Nun liegt eine Situation vor, bei der einerseits das Ankerelement an der Steuereinheit und andererseits der Grundkörper am Ventilgehäuse anliegt. Wird nun die Aufpresskraft entfernt, verringert sich aufgrund der elastischen Rückstellkraft des zweiten Abdichtabschnittes die diesbezügliche Eindringtiefe des zweiten Ventilsitzes, wobei der Grundkörper vom Ventilgehäuse und das Ankerelement von der Steuereinheit abrückt. Im Normalbetrieb der Ventileinrichtung wird das Ventilglied durch die Elektromagneteinrichtung nur so stark angezogen, dass der Grundkörper des Verschlussabschnittes in der zweiten Schaltstellung nicht am Ventilgehäuse anliegt, weil er zuvor durch den Kontakt zwischen dem zweiten Ventilsitz und dem zweiten Abdichtabschnitt gestoppt wird. Somit ist der im Betrieb der Ventileinrichtung zwischen dem Ankerelement und der Steuereinheit auftretende minimale axiale Abstand bestimmt durch den axialen Abstand der beiden Positionen, die der Grundkörper einerseits in der zweiten Schaltstellung und andererseits im an das Ventilgehäuse angedrückten Zustand einnimmt. Mithin ist eine hohe Präzision selbst dann gegeben, wenn bei der Herstellung des Ventilgehäuses größere Fertigungstoleranzen zur Anwendung kommen. Somit kann die Ventileinrichtung kostengünstig hergestellt werden.

Vorteilhafte Weiterbildungen der Erfindung gehen aus den Unteransprüchen hervor.

Bei der Ventileinrichtung ist die Anschlagfläche des Grundkörpers zweckmäßigerweise bezüglich der Mittellängsachse des Ventilgliedes radial neben dem zweiten Abdichtabschnitt angeordnet und befindet sich insbesondere radial außerhalb dieses zweiten Abdichtabschnittes.

Bevorzugt ist die Anschlagfläche des Grundkörpers ringförmig ausgebildet und bezüglich der Mittellängsachse des Ventilgliedes konzentrisch angeordnet. Zweckmäßigerweise umschließt die ringförmige Anschlagfläche den zweiten Abdichtabschnitt koaxial. Im am Ventilgehäuse anliegenden Zustand stützt sich die Anschlagfläche des Grundkörpers an einer ringförmigen Gegenanschlagfläche des Ventilgehäuses ab.

Die Elektromagneteinrichtung enthält zweckmäßigerweise eine Steuereinheit, die über eine Flussleiteinrichtung für den erzeugten magnetischen Fluss verfügt, welche mindestens eine dem Ankerelement zugewandte Polfläche aufweist. Bevorzugt ist die Flussleiteinrichtung U-förmig ausgebildet und verfügt über zwei nebeneinander angeordnete, jeweils dem Ankerelement zugewandte Polflächen. An mindestens einer Polfläche stützt sich das Ankerelement ab, wenn der Verschlussabschnitt bei der Herstellung der Ventileinrichtung auf den Antriebsabschnitt aufgepresst wird. Im späteren Betrieb der Ventileinrichtung ist das Ankerelement in jeder möglichen Schaltstellung mit einem Abstand zu jeder Polfläche angeordnet.

Während der zweite Ventilsitz zweckmäßigerweise ein einstückiger Bestandteil des Ventilgehäuses ist, ist der erste Ventilsitz insbesondere Bestandteil eines bezüglich des Ventilgehäuses separaten Ventilsitzträgers. Dieser Ventilsitzträger ist so ausgebildet, dass er zumindest beim Zusammenbau der Ventileinrichtung bezüglich des Ventilgehäuses axial verstellbar ist. Er kann auf diese Weise in unterschiedlichen Axialpositionen bezüglich des Ventilgehäuses positioniert werden und ist in diesen Positionen dann auch jeweils unbeweglich fixierbar oder fixiert. Die Verstellmöglichkeit des Ventilsitzträgers erlaubt eine variable Einstellung des zwischen den beiden einander zugewandten Ventilsitzen vorhandenen axialen Abstandes und somit des vom Ventilglied beim Umschalten zwischen den beiden Schaltstellungen zurückgelegten Umschalthubes.

Der Ventilsitzträger ist bevorzugt hülsenförmig ausgebildet und so angeordnet, dass er einen auf der Seite des ersten Abdichtabschnittes angeordneten axialen Endabschnitt des Antriebsabschnittes des Ventilgliedes koaxial umschließt. Der Ventilsitzträger ist zweckmäßigerweise in eine Aufnahmebohrung des Ventilgehäuses eingeschraubt.

Bevorzugt verfügt der Ventilsitzträger zusätzlich zu dem kragenförmigen ersten Ventilsitz über eine dem Grundkörper des Verschlussabschnittes gegenüberliegende und axial zugewandte weitere Anschlagfläche, wobei es möglich ist, den Ventilsitzträger beim Zusammenbauen der Ventileinrichtung mit dem ersten Ventilsitz so weit in den ersten Abdichtabschnitt einzudrücken, dass die weitere Anschlagfläche an dem Grundkörper des Verschlussabschnittes anliegt, der sich seinerseits mit seiner Anschlagfläche am Ventilgehäuse abstützt.

Auf diese Weise besteht eine einfache Möglichkeit, den Ventilsitzträger als Aufpresswerkzeug zu verwenden, mit dem die Aufpresskraft in den Grundkörper des Verschlussabschnittes eingeleitet wird.

Indem der Ventilsitzträger nach dem Aufpressen des Grundkörpers wieder entgegengesetzt zur Aufpressrichtung relativ zum Ventilgehäuse zurückverlagert wird, kann der Abstand zwischen den beiden Ventilsitzen vergrößert werden, um dem Verschlussabschnitt den notwendigen Spielraum zur Ausführung der Umschaltbewegung zur Verfügung zu stellen.

Das Ventilglied ist zweckmäßigerweise durch Federmittel ständig in Richtung der ersten Schaltstellung vorgespannt. Die erste Schaltstellung bildet dann eine Grundstellung, wenn die Elektromagneteinrichtung deaktiviert ist.

Die Elektromagneteinrichtung ist zweckmäßigerweise so ausgelegt, dass die bei ihrer Aktivierung auf das Ventilglied ausgeübte Anziehungskraft geringer ist als eine Kraft, die notwendig ist, um den Grundkörper des Verschlussabschnittes mit seiner Anschlagfläche an das Ventilgehäuse anzudrücken. Um den Grundkörper an das Ventilgehäuse anzudrücken, muss prinzipiell die elastische Kraft des zweiten Abdichtabschnittes, der an den zweiten Ventilsitz angedrückt wird, überwunden werden. Diese elastische Kraft ist jedoch zweckmäßigerweise größer als die erwähnte Anziehungskraft der Elektromagneteinrichtung, so dass während des Betriebes der Ventileinrichtung stets ein unmittelbarer Kontakt zwischen dem Ankerelement und der Steuereinheit der Elektromagneteinrichtung vermieden ist.

Bei der Ventileinrichtung handelt es sich zweckmäßigerweise um ein 3/2-Mehrwegeventil.

Bei der Herstellung der Ventileinrichtung kann die zum Aufpressen des Grundkörpers auf den Antriebsabschnitt erforderliche Aufpresskraft grundsätzlich auf beliebige Weise in den Verschlussabschnitt eingeleitet werden. Beispielsweise kann mit einem stempelartigen Aufpresswerkzeug, das separat bezüglich der Ventileinrichtung ausgebildet ist, auf den Verschlussabschnitt eingewirkt werden. Besonders vorteilhaft ist es allerdings, wenn man einen den ersten Ventilsitz tragenden und bezüglich des Ventilgehäuses separat ausgebildeten Ventilsitzträger der Ventileinrichtung unmittelbar selbst als Aufpresswerkzeug verwendet, der durch bezüglich des Ventilgehäuses erfolgendes axiales Verstellen an den Verschlussabschnitt angedrückt wird.

Nachfolgend wird die Erfindung anhand der beiliegenden Zeichnung näher erläutert. In dieser zeigen:
- Figur 1: einen Längsschnitt durch eine bevorzugte Ausführungsform der erfindungsgemäßen Ventileinrichtung in der ersten Schaltstellung des Verschlussabschnittes, der hier einer Grundstellung des Ventilgliedes entspricht,
- Figur 2: einen Verfahrensschritt eines bevorzugten Herstellungsverfahrens zur Herstellung der Ventileinrichtung aus Figur 1, bei dem mittels eines nicht gezeigten Aufpresswerkzeuges eine durch einen Pfeil illustrierte Aufpresskraft in den Grundkörper des Verschlussabschnittes eingeleitet wird, und
- Figur 3: den in Figur 2 strichpunktiert umrahmten Ausschnitt bei einem alternativen Verfahrensablauf, bei dem die durch einen Pfeil illustrierte Aufpresskraft mittels eines verstellbaren Ventilsitzträgers in den Grundkörper des Verschlussabschnittes eingeleitet wird.

Die insgesamt mit Bezugsziffer 1 bezeichnete Ventileinrichtung ist beim Ausführungsbeispiel als Mehrwegeventil mit einer 3/2-Ventilfunktion ausgebildet, stellt also mit anderen Worten ein 3/2-Mehrwegeventil dar.

Die Ventileinrichtung 1 enthält ein Ventilgehäuse 2, an dem außen drei Ventilanschlüsse 3, 4, 5 ausgebildet sind, durch die ein Druckfluid, insbesondere Druckluft, hindurchleitbar ist.

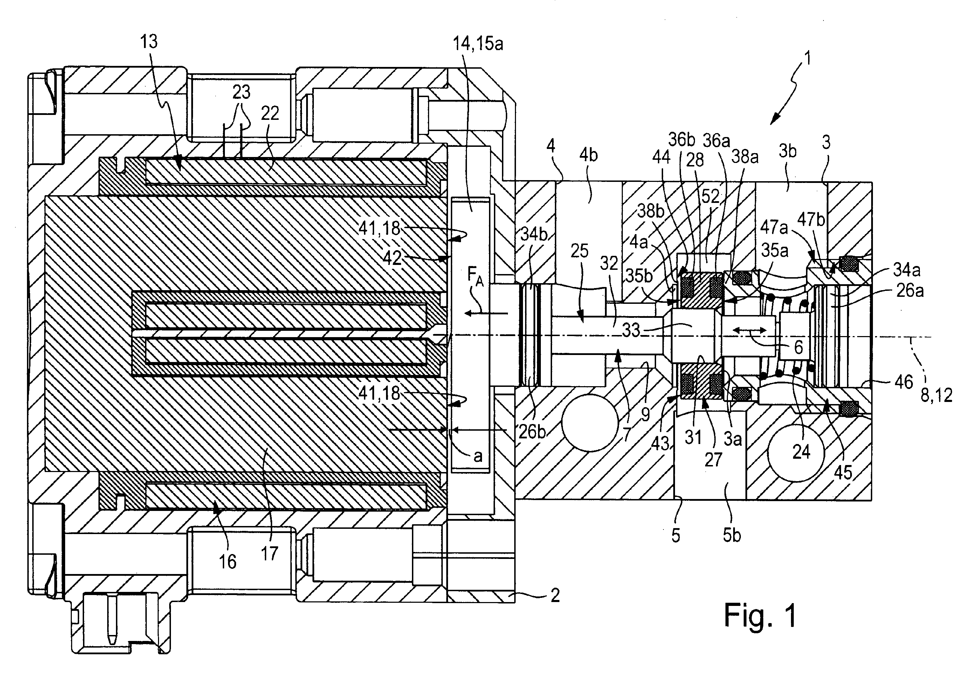

Im Innern des Ventilgehäuses 2 befindet sich ein unter Ausführung einer durch einen Doppelpfeil angedeuteten Umschaltbewegung 6 linear in einer axialen Richtung hin und her bewegliches Ventilglied 7. Durch die Umschaltbewegung 6 kann das Ventilglied 7 wahlweise in einer aus Figur 1 ersichtlichen ersten Schaltstellung und einer diesbezüglich axial verlagerten zweiten Schaltstellung positioniert werden. In der abgebildeten ersten Schaltstellung ist von den schon erwähnten drei Ventilanschlüssen 3, 4, 5 der zweite Ventilanschluss 4 mit dem dritten Ventilanschluss 5 fluidisch verbunden, während der erste Ventilanschluss 3 abgetrennt ist. In der zweiten Schaltstellung liegt eine Fluidverbindung zwischen dem ersten Ventilanschluss 3 und dem dritten Ventilanschluss 5 vor, während der zweite Ventilanschluss 4 abgetrennt ist. Auf diese Weise kann der dritte Ventilanschluss 5 wahlweise mit dem ersten Ventilanschluss 3 oder dem zweiten Ventilanschluss 4 verbunden werden.

Das Ventilglied 7 erstreckt sich in einer im Innern des Ventilgehäuses 2 ausgebildeten, eine Längsachse 8 aufweisenden Aufnahmebohrung 9. Das Ventilglied 7 hat eine axiale Erstreckung mit einer Mittellängsachse 12, die mit der Längsachse 8 der Aufnahmebohrung 9 zusammenfällt.

Einem der beiden axialen Endabschnitte des eine Längsgestalt aufweisenden Ventilgliedes 7 ist eine Elektromagneteinrichtung 13 zugeordnet. Die Elektromagneteinrichtung 13 verfügt über ein magnetisch leitfähiges Ankerelement 14, das bezüglich des Ventilgehäuses 2 axial beweglich ist und das als Bestandteil des Ventilgliedes 7 ausgebildet ist.

Sofern im Folgenden von einer "axialen" Richtung die Rede ist, ist die Achsrichtung der Mittellängsachse 12 gemeint, sofern keine anderweitigen Angaben gemacht werden.

Das Ankerelement 14 bildet einen ersten axialen Endabschnitt 15a des Ventilgliedes 7.

An den ersten axialen Endabschnitt 15a des Ventilgliedes 7 schließt sich axial eine elektrisch aktivierbare Steuereinheit 16 der Elektromagneteinrichtung 13 an. Diese Steuereinheit 16 enthält eine Flussleiteinrichtung 17 aus einem magnetisch leitenden Material, die beim Ausführungsbeispiel U-förmig gestaltet ist. Die Flussleiteinrichtung 17 verfügt über mindestens eine Polfläche 18, die dem Ankerelement 14 axial zugewandt ist. Aufgrund der U-förmigen Gestaltung weist die Flussleiteinrichtung 17 beim Ausführungsbeispiel zwei Polflächen 18 auf, die jeweils von der Stirnfläche eines der beiden U-Schenkel gebildet sind.

Auf der Flussleiteinrichtung 17 sitzt eine Spuleneinrichtung 22 der Elektromagneteinrichtung 13, die mittels von außen her zugänglichen elektromechanischen Kontaktmitteln 23 elektrisch bestrombar ist. Liegt an den Kontaktmitteln 23 keine Spannung an, ist die Elektromagneteinrichtung 13 deaktiviert. Durch Anlegen einer Spannung kann die Spuleneinrichtung 22 bestromt und mithin die Elektromagneteinrichtung 13 aktiviert werden, so dass sich ein Magnetfeld ausbildet, das eine magnetische Anziehungskraft F_{A} auf das Ankerelement 14 ausübt, so dass das Ankerelement 14 in Richtung zu den Polflächen 18 herangezogen wird.

Das Ankerelement 14 ist zweckmäßigerweise ein längliches, plattenförmiges Gebilde.

Durch die Anziehungskraft F_{A} kann das Ventilglied 7 in die erste Schaltstellung verlagert werden. Bei deaktivierter Elektromagneteinrichtung 13 nimmt das Ventilglied 7 die erste Schaltstellung ein, in die es durch Federmittel 24 gedrückt wird. Es handelt sich hierbei vorzugsweise um mechanische Federmittel 24. Die Federmittel 24 wirken beim Ausführungsbeispiel zwischen dem Ventilglied 7 und einem noch zu erläuternden, sich am Ventilgehäuse 2 abstützenden Ventilsitzträger 45.

In jeder Schaltstellung des Ventilgliedes 7 liegt zwischen dem Ankerelement 14 und der Steuereinheit 16 beziehungsweise den Polflächen 18 ein axialer Abstand "a" vor. Dieser axiale Abstand "a" ist in der ersten Schaltstellung größer als in der zweiten Schaltstellung. In keiner während des Betriebs der Ventileinrichtung 1 zwischen dem Ventilglied 7 und dem Ventilgehäuse 2 eingenommenen Relativposition ergibt sich ein mechanischer Kontakt zwischen dem Ankerelement 14 und der Steuereinheit 16. Stets ist hier ein axialer Abstand "a" vorhanden, der durch einen Luftspalt definiert ist. Der kleinste axiale Abstand "a" liegt in der zweiten Schaltstellung des Ventilgliedes 7 vor.

Das Ventilglied 7 ist mehrteilig aufgebaut. Es enthält eine aufgrund ihrer Funktion als Antriebsabschnitt 25 bezeichnete Komponente, die über eine längliche Gestalt verfügt und deren Längsachse mit der Mittellängsachse 12 zusammenfällt. Das Ankerelement 14 ist ein Bestandteil des Antriebsabschnittes 25 und befindet sich an einem der Steuereinheit 16 zugewandten zweiten axialen Endabschnitt 26b des Antriebsabschnittes 25. Der gesamte Antriebsabschnitt 25 kann ein einstückiger Körper sein oder auch mehrteilig aus mehreren aneinander befestigten Komponenten zusammengesetzt sein. Beispielsweise kann das Ankerelement 14 an dem sich anschließenden Längenabschnitt des Antriebsabschnittes 25 durch eine Schraubverbindung fixiert sein.

Als weitere Komponente enthält das Ventilglied 7 einen ringförmigen Verschlussabschnitt 27, der in einem Bereich auf dem Antriebsabschnitt 25 angeordnet ist, welcher zwischen dem das Ankerelement 14 aufweisenden zweiten axialen Endabschnitt 26b und dem diesbezüglich entgegengesetzten ersten axialen Endabschnitt 26a des Antriebsabschnittes 25 liegt. Der ringförmige Verschlussabschnitt 27 umschließt den Antriebsabschnitt 25 in konzentrischer Anordnung. Seine Längsachse fällt mit der Mittellängsachse 12 zusammen.

Der Verschlussabschnitt 27 ist derart an dem Antriebsabschnitt 25 befestigt, dass zwischen diesen beiden Komponenten während des normalen Betriebs der Ventileinrichtung 1 keine axiale Relativbewegung möglich ist. Die beiden Bestandteile sind also axial ortsfest aneinander fixiert.

Der Verschlussabschnitt 27 ist in der axialen Richtung des Ventilgliedes 7 ohne Formschluss rein kraftschlüssig an dem Antriebsabschnitt 25 befestigt. Dies resultiert daraus, dass der Verschlussabschnitt 27 auf den Antriebsabschnitt 25 aufgepresst und dadurch im Presssitz auf dem Antriebsabschnitt 25 befestigt ist.

Seitens des Verschlussabschnittes 27 bezieht sich die Presssitzverbindung auf einen aus einem starren Material bestehenden ringförmigen Grundkörper 28, der den Antriebsabschnitt 25 konzentrisch umschließt. Er besteht beispielsweise aus Metall oder aus einem Kunststoffmaterial.

Der Antriebsabschnitt 25 verfügt über einen sich zwischen den beiden axialen Endabschnitten 26a, 26b erstreckenden stangenförmigen Mittelabschnitt 32. Dieser Mittelabschnitt 32 verfügt an einer zu den beiden axialen Endabschnitten 26a, 26b beabstandeten Stelle über einen radial erweiterten Befestigungsbund 33 mit einer bevorzugt kreiszylindrischen Außenumfangsfläche. Der Grundkörper 28 verfügt über eine zentrale Durchbrechung 34 mit einer bevorzugt ebenfalls kreiszylindrisch ausgebildeten Innenumfangsfläche. Die sich axial an den Befestigungsbund 33 anschließenden Längenabschnitte des Antriebsabschnittes 25 haben, zumindest zum ersten axialen Endabschnitt 26a hin und vorzugsweise auch zum zweiten axialen Endabschnitt 26b hin, einen kleineren Durchmesser als der Befestigungsbund 33.

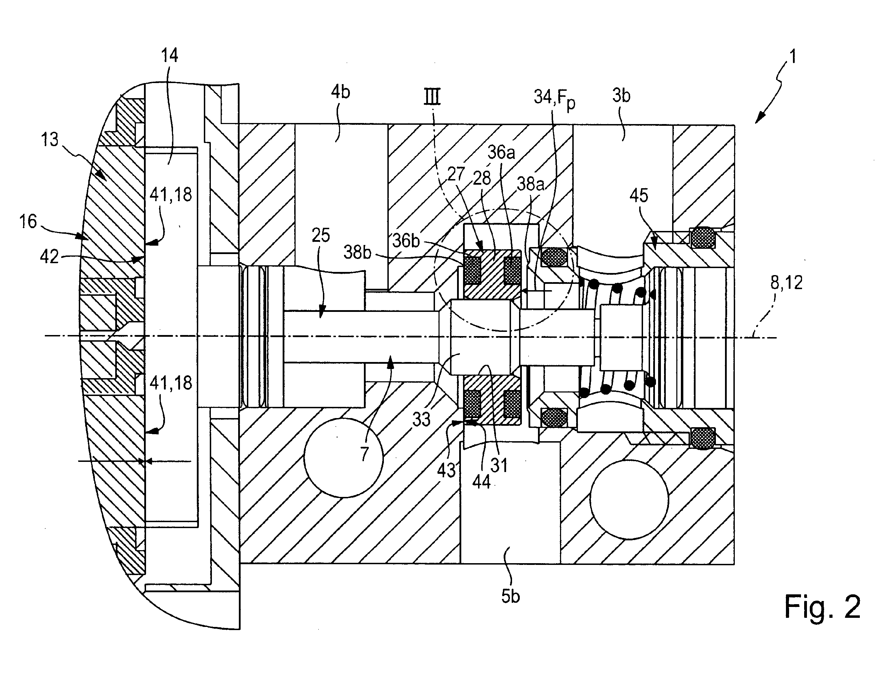

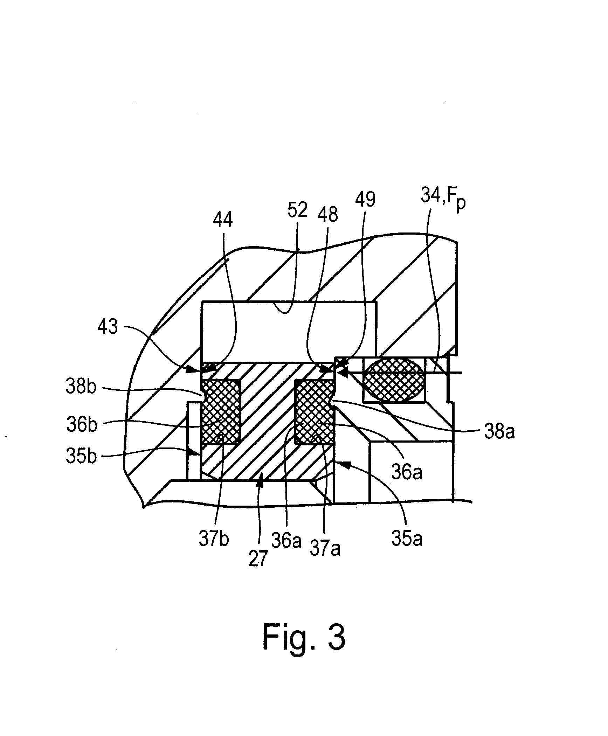

Vor der Montage auf dem Befestigungsbund 33 ist der Innendurchmesser des Grundkörpers 28 etwas kleiner als der Außendurchmesser des Befestigungsbundes 33. Der Verschlussabschnitt 27 kann gemäß Figuren 2 und 3 durch Einleiten einer axial orientierten, bei 34 durch einen Pfeil illustrierten Aufpresskraft F_{P} von der Seite des ersten axialen Endabschnittes 26a her auf den Befestigungsbund 33 aufgeschoben und dabei aufgepresst werden. Da der Verschlussabschnitt 27 nicht gegen einen Anschlag des Antriebsabschnittes 25 angedrückt wird, ist die im aufgepressten Zustand zwischen dem Verschlussabschnitt 27 und dem Antriebsabschnitt 25 vorliegende axiale Relativposition stufenlos variabel wählbar.

Der Verschlussabschnitt 27 hat eine von der Steuereinheit 16 axial abgewandte erste Stirnseite 35a und eine diesbezüglich axial entgegengesetzte, der Steuereinheit 16 zugewandte zweite Stirnseite 35b. Der Grundkörper 28 ist an der ersten Stirnseite 35a mit einem zu der Mittellängsachse 12 konzentrischen, ringförmigen ersten Abdichtabschnitt 36a versehen. An der entgegengesetzten zweiten Stirnseite 35b trägt der Grundkörper 28 einen zu der Mittellängsachse 12 ebenfalls konzentrischen, ringförmigen zweiten Abdichtabschnitt 36b. Beide Abdichtabschnitte sind gummielastisch verformbar ausgebildet und bestehen zweckmäßigerweise insgesamt aus einem Material mit gummielastischen Eigenschaften. Exemplarisch sind die beiden Abdichtabschnitte 36a, 36b aus Elastomermaterial gefertigt.

Die Abdichtabschnitte 36a, 36b können prinzipiell außen auf den Grundkörper 28 aufgebracht sein. Vorteilhafter ist die beim Ausführungsbeispiel realisierte Anbringungsart, bei der der Grundkörper 28 an den beiden Stirnseiten 35a, 35b jeweils eine axial offene Ringnut 37a, 37b aufweist, in die der zugehörige Abdichtabschnitt 36a, 36b in Gestalt eines gummielastischen Abdichtmaterials eingesetzt ist. Der Verschlussabschnitt 37 hat an den beiden Stirnseiten 35a, 35b bevorzugt jeweils eine sich in einer bezüglich der Mittellängsachse 12 rechtwinkeligen Radialebene erstreckende Abschlussfläche, die sich teils am Grundkörper 28 und teils am zugehörigen Abdichtabschnitt 36a, 36b befindet.

Wie aus der Zeichnung gut ersichtlich ist, weisen die beiden Abdichtabschnitte 36a, 36b in einander entgegengesetzte axiale Richtungen voneinander weg.

Dem ersten Abdichtabschnitt 36a liegt ein bezüglich des Ventilgehäuses 2 ortsfester erster Ventilsitz axial gegenüber. Dieser erste Ventilsitz 38a ist ringförmig ausgebildet und konzentrisch zu der Mittellängsachse 12 angeordnet. Er hat eine kragenartige Struktur, wobei er dem ersten Abdichtabschnitt 36a axial entgegenragt. Der erste Ventilsitz 38a weist also in Richtung zu der Steuereinheit 16.

Dem zweiten Abdichtabschnitt 36b liegt ein ebenfalls bezüglich des Ventilgehäuses 2 ortsfester zweiter Ventilsitz 38b axial gegenüber. Auch dieser zweite Ventilsitz 38b ist ringförmig ausgebildet und konzentrisch zu der Mittellängsachse 12 angeordnet. Er ist außerdem kragenförmig strukturiert, wobei er dem zweiten Abdichtabschnitt 36b axial entgegenragt. Er weist also axial von der Steuereinheit 16 weg.

Mithin liegt der Verschlussabschnitt 27 axial zwischen dem ersten Ventilsitz 38a und dem zweiten Ventilsitz 38b, die einander axial zugewandt sind.

Der axiale Abstand zwischen den beiden Ventilsitzen 38a, 38b ist etwas größer als die axiale Länge des Verschlussabschnittes 27 im Bereich der beiden Abdichtabschnitte 36a, 36b. Auf diese Weise verfügt der Verschlussabschnitt 27 über eine axiale Bewegungsfreiheit bezüglich des Ventilgehäuses 2, die die Ausführung der Umschaltbewegung 6 ermöglicht. In der ersten Schaltstellung liegt der Verschlussabschnitt 27 mit dem ersten Abdichtabschnitt 36a unter Abdichtung am ersten Ventilsitz 38a an, wobei gleichzeitig der zweite Abdichtabschnitt 36b vom zweiten Ventilsitz 38b abgehoben ist. Umgekehrt liegt der zweite Abdichtabschnitt 36b in der zweiten Schaltstellung unter Abdichtung am zweiten Ventilsitz 38b an, wobei gleichzeitig der erste Abdichtabschnitt 36a vom ersten Ventilsitz 38a abgehoben ist.

Wie schon erwähnt, kann durch wahlweises Aktivieren und Deaktivieren der Elektromagneteinrichtung 13 die Umschaltbewegung 6 hervorgerufen und das Ventilglied 7 alternativ in der ersten Schaltstellung oder in der zweiten Schaltstellung positioniert werden.

Bei dieser normalen Betriebsweise der Ventileinrichtung 1 kann das Ankerelement 14 niemals an der Steuereinheit 16 zur Anlage gelangen. Ein axialer Abstand "a" von größer Null ist also stets gewährleistet.

Dadurch jedoch, dass die Abdichtabschnitte 36a, 36b über gummielastisch nachgiebige Eigenschaften verfügen, besteht prinzipiell die Möglichkeit, das Ventilglied 7 mit seinem Ankerelement 14 an die ihm zugewandte stirnseitige Endfläche 41 der Steuereinheit 16 anzudrücken, wenn nur die Drückkraft ausreichend groß ist, um die elastische Kraft des zweiten Abdichtabschnittes 36b, der an dem zweiten Ventilsitz 38b anliegt, zu überwinden. Ein solcher Zustand tritt während des normalen Betriebes der Ventileinrichtung 1 jedoch nicht auf, weil die von der Elektromagneteinrichtung 13 erzeugbare Anziehungskraft geringer ist als die Kraft, die notwendig ist, um den zweiten Abdichtabschnitt 36b so weit auf den zweiten Ventilsitz 38b aufzudrücken, dass das Ankerelement 14 an der stirnseitigen Endfläche 41 der Steuereinheit 16 zur Anlage gelangt.

Beim Ausführungsbeispiel ist die stirnseitige Endfläche 41 durch die vorhandenen Polflächen 18 definiert.

Die bezüglich des Antriebsabschnittes 25 eingenommene axiale Relativposition des Verschlussabschnittes 27 zeichnet sich durch eine vorteilhafte Besonderheit aus. Diese Besonderheit besteht in einem speziellen Abstand zwischen dem Verschlussabschnitt 27 und dem Ankerelement 14. Dieser Abstand ist so gewählt, dass dann, wenn das Ankerelement 14 mit seiner der Steuereinheit 16 axial zugewandten äußeren Stirnfläche 42 an der stirnseitigen Endfläche 41 der Steuereinheit 16 anliegt, zugleich auch der Grundkörper 28 des Verschlussabschnittes 27 mit einer an seiner zweiten Stirnseite 35b ausgebildeten, axial orientierten Anschlagfläche 43 an einer bezüglich des Ventilgehäuses 2 ortsfesten Gegenanschlagfläche 44 zur Anlage gelangt. Dieser Zustand ist verbunden mit dem Umstand, dass zugleich der kragenförmige zweite Ventilsitz 38b weiter in den gummielastisch verformbaren zweiten Abdichtabschnitt 36b eingedrückt ist, als dies beim Normalbetrieb der Ventileinrichtung 1 möglich ist.

Die Anschlagfläche 43 ist der Steuereinheit 16 zugewandt, die Gegenanschlagfläche 44 weist axial von der Steuereinheit 16 weg.

Die Anschlagfläche 43 ist bevorzugt eine Ringfläche und bezüglich der Mittellängsachse 12 konzentrisch angeordnet. Sie liegt mit Bezug zur Mittellängsachse 12 radial neben dem zweiten Abdichtabschnitt 36b, wobei sie beim Ausführungsbeispiel den zweiten Abdichtabschnitt 36b radial außen konzentrisch umschließt.

Konkret befindet sich die Anschlagfläche 43 beim Ausführungsbeispiel an dem sich radial außen an die den zweiten Abdichtabschnitt 36b aufnehmende Ringnut 37b anschließenden Abschnitt des Grundkörpers 28.

Die Gegenanschlagfläche 44 ist zweckmäßigerweise auch ringförmig ausgebildet und konzentrisch zu der Mittellängsachse 12 angeordnet. Sie ist zweckmäßigerweise ein einstückiger Bestandteil des Ventilgehäuses 2. Auch der zweite Ventilsitz 38b ist zweckmäßigerweise ein einstückiger Bestandteil des Ventilgehäuses 2. Die Anschlagfläche 43 und der zweite Ventilsitz 38b sind insgesamt bevorzugt einstückig miteinander ausgebildet.

Auch der erste Ventilsitz 38a kann einstückig mit dem Ventilgehäuse 2 ausgebildet sein. Allerdings wird es als besonders vorteilhaft angesehen, wenn er, wie beim Ausführungsbeispiel, Bestandteil eines bezüglich des Ventilgehäuses 2 separaten und bezüglich des Ventilgehäuses 2 axial verstellbaren Ventilsitzträgers 45 ist. Während des normalen Betriebes der Ventileinrichtung 1 ist der Ventilsitzträger 45 allerdings bezüglich des Ventilgehäuses 2 axial unbeweglich fixiert. Die axiale Beweglichkeit ist für eine besonders einfache Art der Herstellung der Ventileinrichtung 1 und/oder für eine leichte Einstellung des Umschalthubes des Ventilgliedes 7 vorteilhaft.

Der Ventilsitzträger 45 ist zweckmäßigerweise hülsenförmig ausgebildet und in den der Steuereinheit 16 axial entgegengesetzten äußeren Endabschnitt 46 der Aufnahmebohrung 9 eingesetzt. Dabei umschließt er den auf der Seite des ersten Abdichtabschnittes 36a angeordneten ersten axialen Endabschnitt 26a des Antriebsabschnittes 25. Der erste Ventilsitz 38a befindet sich zweckmäßigerweise an der dem Verschlussabschnitt 27 zugewandten Stirnseite des Ventilsitzträgers 45 und ist insbesondere ein einstückiger Bestandteil des Ventilsitzträgers 45. Die beiden kragenförmigen, bezüglich radial benachbarten Bereichen jeweils axial erhaben ausgebildeten Ventilsitze 38a, 38b bestehen jedenfalls aus einer härteren Struktur als der zugeordnete elastische Abdichtabschnitt 36a, 36b.

Um die axiale Verstellbarkeit des Ventilsitzträgers 45 zu realisieren, ist er zweckmäßigerweise in die Aufnahmebohrung 9 eingeschraubt. Beim Ausführungsbeispiel verfügt er zu diesem Zweck an seinem Außenumfang über ein Außengewinde 47a, das in ein Innengewinde 47b am Innenumfang des äußeren Endabschnittes 46 der Aufnahmebohrung 9 eingeschraubt ist.

Insbesondere wenn eine noch zu erläuternde besondere Art der Herstellung der Ventileinrichtung 1 realisiert werden soll, ist es von Vorteil, wenn der Ventilsitzträger 45 zusätzlich zu dem kragenförmigen ersten Ventilsitz 38a auch noch eine dem Grundkörper 28 gegenüberliegende und axial zugewandte weitere Anschlagfläche 48 aufweist, der eine an der ersten Stirnseite 35a an dem Grundkörper 28 ausgebildete weitere Gegenanschlagfläche 49 gegenüberliegt.

Im Normalbetrieb der Ventileinrichtung 1 gelangen die weitere Anschlagfläche 48 und die weitere Gegenanschlagfläche 49 nicht in Kontakt miteinander. Ein gewisser Mindestabstand wird in der ersten Schaltstellung dadurch gewahrt, dass der Verschlussabschnitt 27 mit seinem ersten Abdichtabschnitt 36a an dem bezüglich der weiteren Anschlagfläche 48 axial vorstehenden ersten Ventilsitz 38a anliegt. An dieser Stelle sei noch angemerkt, dass in vergleichbarer Weise der kragenförmige zweite Ventilsitz 38b bezüglich der Gegenanschlagfläche 49 in Richtung zum Verschlussabschnitt 27 axial vorsteht.

Wird allerdings bei der Herstellung der Ventileinrichtung 1 eine ausreichend hohe Stellkraft in den Ventilsitzträger 45 eingeleitet, so dass dieser sich in Richtung zu dem Verschlussabschnitt 27 vorschraubt, ist der erste Ventilsitz 38a in den elastisch nachgiebigen ersten Abdichtabschnitt 36a eindrückbar, bis der Ventilsitzträger 45 mit der weiteren Anschlagfläche 48 an der weiteren Gegenanschlagfläche 49 anliegt.

Zum grundsätzlichen Ventilaufbau des Ausführungsbeispiels ist noch zu sagen, dass der erste Ventilsitz 38a eine erste Überströmöffnung 3a umrahmt und dass der zweite Ventilsitz 38b eine zweite Überströmöffnung 4a umrahmt. Beide Überströmöffnungen 3a, 4a sind axial orientiert, wobei die erste Überströmöffnung 3a über einen ersten Ventilkanal 3b zu dem ersten Ventilanschluss 3 führt und die zweite Überströmöffnung 4a über einen sich anschließenden zweiten Ventilkanal 4b zu dem zweiten Ventilanschluss 4 führt. Beide Ventilkanäle 3b, 4b erstrecken sich ein Stück weit in der axialen Richtung der Aufnahmebohrung 9, wobei der erste Ventilkanal 3b den mit einer partiell durchbrochenen Wandung versehenen Ventilsitzträger 45 durchsetzt.

Der dritte Ventilanschluss 5 kommuniziert über einen dritten Ventilkanal 5b mit einer von der Aufnahmebohrung 9 definierten Ventilkammer 52, in der der Verschlussabschnitt 27 axial beweglich angeordnet ist. Diese Ventilkammer 52 ist axial einerseits vom Ventilgehäuse 2 und andererseits von dem Ventilsitzträger 45 begrenzt.

Bei einer bevorzugten Art der Herstellung der Ventileinrichtung 1 wird das Ventilglied 7 mit seinem Grundkörper 28 axial in Richtung zu der Steuereinheit 16 auf den Antriebsabschnitt 25 aufgepresst, während sich dieser Antriebsabschnitt 25 mit seinem Ankerelement 14 an der stirnseitigen Endfläche 41 der Steuereinheit 16 - hier die Polfläche 18 - axial unbeweglich abstützt. Die oben erwähnte, für den Betrieb angestrebte axiale Relativposition zwischen dem Verschlussabschnitt 27 und dem Antriebsabschnitt 25 wird also in einem Zustand eingestellt, in dem der Antriebsabschnitt 25 bereits in die Aufnahmebohrung 9 eingesetzt ist.

Die zum Aufpressen des Verschlussabschnittes 27 erforderliche Aufpresskraft F_{P} wird vorzugsweise in den Grundkörper 28 eingeleitet, worauf sich dieser Grundkörper 28 auf dem Befestigungsbund 33 axial in Richtung zu der Steuereinheit 16 verlagert. Die Relativbewegung bezüglich des Antriebsabschnittes 25 resultiert daraus, dass der Antriebsabschnitt 25 von der Steuereinheit 16 abgestützt ist.

Der Aufpressvorgang wird beendet, wenn der Grundkörper 28 mit seiner Anschlagfläche 43 an der Gegenanschlagfläche 44 des Ventilgehäuses 2 zur Anlage gelangt ist. Bei diesem Zustand ist außerdem, wie insbesondere aus Figur 3 ersichtlich ist, der erhaben ausgebildete zweite Ventilsitz 38b unter Überwindung der elastischen Rückstellkraft des zweiten Abdichtabschnittes 36b in den zweiten Abdichtabschnitt 36b eingedrückt. Die Eindrücktiefe ist größer als in der im Normalbetrieb der Ventileinrichtung 1 ermöglichten zweiten Schaltstellung des Ventilgliedes 7.

Anschließend wird die Aufpresskraft F_{P} wieder weggenommen. Nun verändert sich die axiale Relativposition zwischen dem Grundkörper 28 und dem Antriebsabschnitt 25 nicht mehr, weil der Grundkörper 28 kraftschlüssig auf dem Antriebsabschnitt 25 befestigt ist.

Das Wegnehmen der Aufpresskraft F_{P} hat allerdings wegen der rückfedernden Eigenschaften des elastischen zweiten Abdichtabschnittes 36b die Folge, dass der Grundkörper 28 von der Gegenanschlagfläche 44 abhebt. Wenn zu diesem Zeitpunkt die Federmittel 24 bereits montiert sind, wird dieses Abrücken von der Gegenanschlagfläche 44 selbstverständlich auch durch diese Federmittel 24 bewirkt.

Das Abrücken des Grundkörpers 28 von der Gegenanschlagfläche 44 hat wegen der kraftschlüssigen Verbindung zum Antriebsabschnitt 25 die zwangsläufige Folge, dass auch das Ankerelement 14 einen axialen Abstand "a", also eine Entfernung von größer Null bezüglich der stirnseitigen Endfläche 41 einnimmt.

Für den späteren Betrieb der Ventileinrichtung 1 ist nun gewährleistet, dass das Ankerelement 14 in der zweiten Schließstellung des Ventilgliedes 7 nicht an der Steuereinheit 16 anschlagen kann.

Gemäß der Illustration in Figur 2 kann die Aufpresskraft F_{P} mittels eines nicht weiter gezeigten bezüglich der Ventileinrichtung 1 gesonderten Aufpresswerkzeuges in den Grundkörper 28 eingeleitet werden. Als vorteilhafter wird es jedoch angesehen, wenn die Aufpresskraft F_{P} entsprechend der Illustration in Figur 3 unmittelbar durch den Ventilsitzträger 45 in den Grundkörper 28 eingeleitet wird. In diesem Fall übernimmt also der Ventilsitzträger 45 die Funktion eines Aufpresswerkzeuges.

In diesem Falle werden die weitere Anschlagfläche 48 und die weitere Gegenanschlagfläche 49 genutzt. Der Ventilsitzträger 45 wird in Richtung zur Steuereinheit 16 bewegt, bis er mit seiner weiteren Anschlagfläche 48 an der weiteren Gegenanschlagfläche 49 des Grundkörpers 28 anliegt und zugleich dieser Grundkörper 28 mit seiner Anschlagfläche 43 an der Gegenanschlagfläche 44 anliegt. In diesem Zustand haben sich beide Ventilsitze 38a, 38b in den ihnen zugeordneten Abdichtabschnitten 36a, 36b eingedrückt. Im Übrigen stützt sich hierbei das Ankerelement 14 wie oben beschrieben an der stirnseitigen Endfläche 41 der Steuereinheit 16 ab.

Das anschließende Wegnehmen der Aufpresskraft geschieht durch axiales Zurückbewegen des Ventilsitzträgers 45, was beim Ausführungsbeispiel dadurch erfolgt, dass der Ventilsitzträger 45 ein Stück weit aus der Aufnahmebohrung 9 herausgeschraubt wird. Die entgegen der Aufpressrichtung stattfindende Zurückbewegung des Ventilsitzträgers 45 wird so weit vorgenommen, dass die beiden sich gegenüberliegenden Ventilsitze 38a, 38b einen den angestrebten Umschalthub des Ventilgliedes 7 vorgebenden axialen Abstand zueinander einnehmen.

Das Maß des axialen Wegbewegens des Ventilsitzträgers 45 vom zweiten Ventilsitz 38b entspricht insbesondere dem gewünschten Umschalthub zuzüglich der beim Aufpressvorgang auftretenden Eindrücktiefe der Ventilsitze 38a, 38b bezüglich der Abdichtabschnitte 36a, 36b.

Für die Schraubverbindung zwischen dem Ventilsitzträger 45 und dem Ventilgehäuse 2 wird zweckmäßigerweise auf eine Feingewindeanordnung zurückgegriffen. Dadurch ist eine sehr exakte Justierung möglich. Auch kann dadurch sehr einfach gewährleistet werden, dass die bezüglich des Ventilgehäuses 2 für den Normalbetrieb der Ventileinrichtung eingestellte Axialposition des Ventilsitzträgers 45 auch bei betrieblichen Erschütterungen keine Veränderung erfährt. Selbstverständlich ist es gleichwohl zweckmäßig, Sicherungsmaßnahmen vorzusehen, die ein unbeabsichtigtes axiales Verstellen des Ventilsitzträgers 45 verhindern. Hierzu kann beispielsweise ein Sicherungselement vorgesehen werden oder es wird ein Klebstoff zwischen dem Ventilgehäuse 2 und dem Ventilsitzträger 45 appliziert.

## Patentansprüche

1. Ventileinrichtung, mit einem Ventilgehäuse (2), in dem ein unter Ausführung einer linearen Umschaltbewegung (6) in einer axialen Richtung zwischen einer ersten und einer zweiten Schaltstellung umschaltbares Ventilglied (7) angeordnet ist, das einen koaxial auf einem Antriebsabschnitt (25) des Ventilgliedes (7) angeordneten ringförmigen Verschlussabschnitt (27) mit zwei an einander entgegengesetzten Stirnseiten (35a, 35b) angeordneten und voneinander wegweisenden ersten und zweiten Abdichtabschnitten (36a, 36b) aufweist, der in der ersten Schaltstellung mit dem ersten Abdichtabschnitt (36a) an einem kragenförmigen, bezüglich des Ventilgehäuses (2) ortsfesten ersten Ventilsitz (38a) anliegt und in einer zweiten Schaltstellung mit dem zweiten Abdichtabschnitt (36b) an einem dem ersten Ventilsitz (38a) mit axialem Abstand gegenüberliegenden, bezüglich des Ventilgehäuses (2) ortsfesten, kragenförmigen zweiten Ventilsitz (38b) anliegt, und mit einer zum Hervorrufen der Umschaltbewegung (6) dienenden Elektromagneteinrichtung (13) mit einer bezüglich des Ventilgehäuses (2) ortsfesten, eine bestrombare Spuleneinrichtung (22) enthaltenden Steuereinheit (16) und einem diesbezüglich axial beweglichen, als Bestandteil des Antriebsabschnittes (25) des Ventilgliedes (7) ausgebildeten Ankerelement (14), wobei, der Verschlussabschnitt (27) des Ventilgliedes (7) einen starren, ringförmigen Grundkörper (28) aufweist, der die beiden Abdichtabschnitte (36a, 36b) trägt, die gummielastisch verformbar ausgebildet sind, **dadurch gekennzeichnet, dass** der Verschlussabschnitt (27) mit seinem Grundkörper (28) im Presssitz auf dem Antriebsabschnitt (25) befestigt ist und dabei bezüglich des Antriebsabschnittes (25) eine derartige axiale Relativposition einnimmt, dass bei Anlage des Ankerelementes (14) an der Steuereinheit (16) der Elektromagneteinrichtung (13) gleichzeitig der Grundkörper (28) des Verschlussabschnittes (27) mit einer an der den zweiten Abdichtabschnitt (36b) aufweisenden Stirnseite (35b) ausgebildeten, axial orientierten Anschlagfläche (43) am Ventilgehäuse (2) anliegt und der kragenförmige zweite Ventilsitz (38b) in den gummielastisch verformbaren zweiten Abdichtabschnitt (36b) eingedrückt ist.

2. Ventileinrichtung nach Anspruch 1, **dadurch gekennzeichnet, dass** die Anschlagfläche (43) bezüglich der Mittellängsachse (12) des Ventilgliedes (7) radial neben dem zweiten Abdichtabschnitt (36b) angeordnet ist und sich zweckmäßigerweise radial außerhalb des zweiten Abdichtabschnittes (36b) befindet.

3. Ventileinrichtung nach Anspruch 2, **dadurch gekennzeichnet, dass** die Anschlagfläche (43) ringförmig ausgebildet und bezüglich der Mittellängsachse (12) konzentrisch angeordnet ist, wobei sie sich im am Ventilgehäuse (2) anliegenden Zustand an einer bevorzugt ringförmigen Gegenanschlagfläche (44) des Ventilgehäuses (2) abstützt.

4. Ventileinrichtung nach einem der Ansprüche 1 bis 3, **dadurch gekennzeichnet, dass** die Steuereinheit (16) eine Flussleiteinrichtung (17) für magnetischen Fluss mit mindestens einer dem Ankerelement (14) zugewandten Polfläche (18) aufweist, wobei das Ankerelement (14) an der Polfläche (18) anliegt, wenn der Grundkörper (28) mit seiner Anschlagfläche (43) am Ventilgehäuse (2) anliegt und wobei das Ankerelement (14) in jeder im Betrieb der Ventileinrichtung (1) eingenommenen Schaltstellung mit einem Abstand ("a") zu der mindestens einen Polfläche (18) angeordnet ist.

5. Ventileinrichtung nach einem der Ansprüche 1 bis 4, **dadurch gekennzeichnet, dass** der erste Ventilsitz (38a) an einem zumindest beim Zusammenbau der Ventileinrichtung (1) bezüglich des Ventilgehäuses (2) axial verstellbaren Ventilsitzträger (45) ausgebildet ist, der bezüglich des Ventilgehäuses (2) axial unbeweglich fixierbar oder fixiert ist.

6. Ventileinrichtung nach Anspruch 5, **dadurch gekennzeichnet, dass** der Ventilsitzträger (45) hülsenförmig ausgebildet ist und einen auf der Seite des ersten Abdichtabschnittes (36a) angeordneten axialen Endabschnitt des Antriebsabschnittes (25) koaxial umschließt.

7. Ventileinrichtung nach Anspruch 5 oder 6, **dadurch gekennzeichnet, dass** der erste Ventilsitz (38a) an der dem Verschlussabschnitt (27) zugewandten Stirnseite des Ventilsitzträgers (45) ausgebildet ist.

8. Ventileinrichtung nach einem der Ansprüche 5 bis 7, **dadurch gekennzeichnet, dass** der Ventilsitzträger (45) koaxial in eine Aufnahmebohrung (9) des Ventilgehäuses (2), in der sich auch das Ventilglied (7) erstreckt, eingesetzt und insbesondere eingeschraubt ist.

9. Ventileinrichtung nach einem der Ansprüche 5 bis 8, **dadurch gekennzeichnet, dass** der Ventilsitzträger (45) zusätzlich zu dem kragenförmigen ersten Ventilsitz (38a) eine dem Grundkörper (28) des Verschlussabschnittes (27) gegenüberliegende und axial zugewandte weitere Anschlagfläche (48) aufweist, wobei der erste Ventilsitz (38a) beim Zusammenbau der Ventileinrichtung (1) durch axiales Verlagern des Ventilsitzträgers (45) so weit in den ersten Abdichtabschnitt (36a) eindrückbar ist, bis die weitere Anschlagfläche (48) an dem sich mit seiner Anschlagfläche (43) am Ventilgehäuse (2) abstützenden Grundkörper (28) des Verschlussabschnittes (27) anliegt.

10. Ventileinrichtung nach einem der Ansprüche 1 bis 9, **dadurch gekennzeichnet, dass** sie Federmittel (24) aufweist, die das Ventilglied (7) ständig in Richtung der ersten Schaltstellung vorspannen, derart, dass das Ventilglied (7) bei deaktivierter Elektromagneteinrichtung (13) die erste Schaltstellung einnimmt.

11. Ventileinrichtung nach einem der Ansprüche 1 bis 10, **dadurch gekennzeichnet, dass** die durch die Elektromagneteinrichtung (13) bei ihrer Aktivierung auf das Ventilglied (7) ausgeübte Anziehungskraft geringer ist als eine Kraft, die notwendig ist, um den Grundkörper (28) des Verschlussabschnittes (27) mit seiner Anschlagfläche (43) an das Ventilgehäuse (2) anzudrücken.

12. Ventileinrichtung nach einem der Ansprüche 1 bis 11, **dadurch gekennzeichnet, dass** sie als Mehrwegeventil mit einer 3/2-Ventilfunktion ausgebildet ist, wobei jeder Ventilsitz (38a, 38b) eine zu einem von zwei Ventilkanälen (3b, 4b) gehörende Überströmöffnung (3a, 4a) umrahmt und wobei eine zwischen den beiden Ventilsitzen (38a, 38b) liegende Ventilkammer (52), in der der Verschlussabschnitt (27) axial beweglich angeordnet ist, ständig mit einem dritten Ventilkanal (5b) verbunden ist.

13. Verfahren zur Herstellung einer Ventileinrichtung (1), die ein Ventilgehäuse (2) aufweist, in dem ein unter Ausführung einer linearen Umschaltbewegung (6) in einer axialen Richtung zwischen einer ersten und einer zweiten Schaltstellung umschaltbares Ventilglied (7) angeordnet ist, das einen koaxial auf einem Antriebsabschnitt (25) des Ventilgliedes (7) angeordneten ringförmigen Verschlussabschnitt (27) mit zwei an einander entgegengesetzten Stirnseiten (35a, 35b) angeordneten und voneinander wegweisenden ersten und zweiten Abdichtabschnitten (36a, 36b) aufweist, der in der ersten Schaltstellung mit dem ersten Abdichtabschnitt (36a) an einem kragenförmigen, bezüglich des Ventilgehäuses (2) ortsfesten ersten Ventilsitz (38a) anliegt und in einer zweiten Schaltstellung mit dem zweiten Abdichtabschnitt (36b) an einem dem ersten Ventilsitz (38a) mit axialem Abstand gegenüberliegenden, bezüglich des Ventilgehäuses (2) ortsfesten, kragenförmigen zweiten Ventilsitz (38b) anliegt, und die eine zum Hervorrufen der Umschaltbewegung (6) dienende Elektromagneteinrichtung (13) mit einer bezüglich des Ventilgehäuses (2) ortsfesten, eine bestrombare Spuleneinrichtung (22) enthaltenden Steuereinheit (16) und einem diesbezüglich axial beweglichen, als Bestandteil des Antriebsabschnittes (25) des Ventilgliedes (7) ausgebildeten Ankerelement (14) aufweist, mit dem folgenden Verfahrensschritt:
(a) Bereitstellen eines Verschlussabschnittes (27), der einen die beiden Abdichtabschnitte (36a, 36b) tragenden starren, ringförmigen Grundkörper (28) aufweist, wobei die Abdichtabschnitte (36a, 36b) gummielastisch verformbar ausgebildet sind, **gekennzeichnet durch** folgende Verfahrensschritte:
(b) koaxiales Aufpressen des Verschlussabschnittes (27) mit seinem Grundkörper (28) auf den Antriebsabschnitt (25) mittels einer Aufpresskraft (F_{P}) in einem Zustand, in dem sich der Antriebsabschnitt (25) mit seinem Ankerelement (14) an der Steuereinheit (16) axial unbeweglich abstützt,
(c) Beenden des Aufpressvorganges, wenn der Grundkörper (28) bezüglich des sich an der Steuereinheit (16) axial unbeweglich abstützenden Antriebsabschnittes (25) eine axiale Relativposition einnimmt, in der er mit einer Anschlagfläche (43), die an der den zweiten Abdichtabschnitt (36b) aufweisenden Stirnseite ausgebildet ist, am Ventilgehäuse (2) anliegt und außerdem der kragenförmige zweite Ventilsitz (38b) in den gummielastisch verformbaren zweiten Abdichtabschnitt (36b) eingedrückt ist, und
(d) Wegnehmen der Aufpresskraft, so dass sich das Ventilglied (7) unter Einfluss der Elastizität des zweiten Abdichtabschnittes (36b) in Richtung der ersten Schaltstellung bewegt und sich dabei der Antriebsabschnitt (25) von der Steuereinheit (16) entfernt.

14. Verfahren nach Anspruch 13, **dadurch gekennzeichnet, dass** die Aufpresskraft (F_{P}) zum Aufpressen des Verschlussabschnittes (27) mittels eines den ersten Ventilsitz (38a) tragenden und bezüglich des Ventilgehäuses (2) separat ausgebildeten Ventilsitzträgers (45) in den Verschlussabschnitt (27) eingeleitet wird, wobei der Ventilsitzträger (45) bezüglich des Ventilgehäuses (2) axial verstellbar ausgebildet ist.

15. Verfahren nach Anspruch 14, **dadurch gekennzeichnet, dass** der Ventilsitzträger (45) nach dem Aufpressen des Verschlussabschnittes (27) auf den Antriebsabschnitt (25) entgegen der Aufpressrichtung relativ zum Ventilgehäuse (2) so weit von dem zweiten Ventilsitz (38b) wegbewegt wird, dass die beiden sich gegenüberliegenden Ventilsitze (38a, 38b) einen den Umschaltweg des Ventilgliedes (7) vorgebenden axialen Abstand zueinander einnehmen.

## Claims

1. Valve device, comprising a valve housing (2) in which is arranged a valve member (7) switchable in an axial direction between a first and a second switching position while performing a linear switchover movement, which valve member (7) comprises an annular closing section (27) mounted coaxially on a drive section (25) of the valve member (7) and having first and second sealing sections (36a, 36b) located on opposite end faces (35a, 35b) and pointing away from one another, which closing section (27) bears in the first switching position with the first sealing section (36a) against a collar-shaped first valve seat (38a) which is stationary relative to the valve housing (2) and in the second switching position with the second sealing section (36b) against a collar-shaped second valve seat (38b) which is stationary relative to the valve housing (2) and placed opposite the first valve seat (38a) at an axial distance, and further comprising a solenoid device (13) for initiating a switchover movement, the solenoid device (13) comprising a control unit (16) which is stationary relative to the valve housing (2) and which contains a coil device (22) to which a current can be applied, and an armature element (14) which is axially movable relative thereto and designed as a part of the drive section (25) of the valve member (7), wherein the closing section (27) of the valve member (7) has a rigid, annular base body (28) which supports the two sealing sections (36a, 36b), which are deformable in a rubber-elastic way, **characterised in that** the closing section (27) is press-fitted to the drive section (25) with its base body (38) and, relative to the drive section (25), adopts such an axial relative position that, if the armature element (14) bears against the control unit (16) of the solenoid device (13), the base body (38) of the closing section (27) simultaneously bears against the valve housing (2) with an axially oriented stop face (43) formed on the end face (35b) having the second sealing section (36b), and the collar-shaped second valve seat (38b) is pushed into the second sealing section (36), which is deformable in a rubber-elastic way.

2. Valve device according to claim 1, **characterised in that** the stop face (43) is arranged radially adjacent to the second sealing section (36b) relative to the longitudinal central axis (12) of the valve member (7) and is expediently placed radially outside the second sealing section (36b).

3. Valve device according to claim 2, **characterised in that** the stop face (43) is annular and arranged to be concentric with the longitudinal central axis (12), being supported on a preferably annular counter-stop face (44) of the valve housing (2) when bearing against the valve housing (2).

4. Valve device according to any of claims 1 to 3, **characterised in that** the control unit (16) comprises a flux conducting device (17) for magnetic flux, with at least one pole face (18) facing the armature element (14), wherein the armature element (14) bears against the pole face (18) if the base body (28) bears against the valve housing (2) with its stop face (43), and wherein the armature element (14) is placed at a distance ("a") from the at least one pole face (18) in each switching position adopted in the operation of the valve device (1).

5. Valve device according to any of claims 1 to 4, **characterised in that** the first valve seat (38a) is formed on a valve seat support (45) which is axially adjustable relative to the valve housing (2) at least during the assembly of the valve device (1) and which can be or is located axially immovable relative to the valve housing (2).

6. Valve device according to claim 5, **characterised in that** the valve seat support (45) is sleeve-shaped and coaxially encloses an axial end section of the drive section (25) located on the side of the first sealing section (36a).

7. Valve device according to claim 5 or 6, **characterised in that** the first valve seat (38a) is formed on the end face of the valve seat support (45) which faces the closing section (27).

8. Valve device according to any of claims 5 to 7, **characterised in that** the valve seat support (45) is installed and in particular screwed coaxially into a reception bore (9) of the valve housing (2), in which the valve member (7) extends as well.

9. Valve device according to any of claims 5 to 8, **characterised in that** the valve seat support (45) comprises, in addition to the collar-shaped first valve seat (38a), a further stop face (48) arranged opposite the base body (28) of the closing section (27) and axially facing it, wherein the first valve seat (38a) can, during the assembly of the valve device (1), be pushed into the first sealing section (36a) by axially displacing the valve seat support (45) until the further stop face (48) bears against the base body (28) of the closing section (27), which is supported on the valve housing (2) by its stop face (43).

10. Valve device according to any of claims 1 to 9, **characterised in that** it comprises spring means (24) which continuously preload the valve member (7) towards the first switching position in such a way that the valve member (7) adopts the first switching position when the solenoid device (13) is deactivated.

11. Valve device according to any of claims 1 to 10, **characterised in that** the force of attraction applied by the activated solenoid device (13) to the valve member (7) is greater then a force which is required for pushing the base body (28) of the closing member (27) against the valve housing (2) with its stop face (43).

12. Valve device according to any of claims 1 to 11, **characterised in that** it is designed as a multiway valve with a 3/2 valve function, wherein each valve seat (38a, 38b) frames an overflow opening (3a, 4a) belonging to one of two valve passages (3b, 4b), and wherein a valve chamber (52) lying between the two valve seats (38a, 38b), in which the closing section (27) is axially movable, is continuously connected to a third valve passage (5b).

13. Method for producing a valve device (1) comprising a valve housing (2) in which is arranged a valve member (7) switchable in an axial direction between a first and a second switching position while performing a linear switchover movement, which valve member (7) comprises an annular closing section (27) mounted coaxially on a drive section (25) of the valve member (7) and having first and second sealing sections (36a, 36b) located on opposite end faces (35a, 35b) and pointing away from one another, which closing section (27) bears in the first switching position with the first sealing section (36a) against a collar-shaped first valve seat (38a) which is stationary relative to the valve housing (2) and in the second switching position with the second sealing section (36b) against a collar-shaped second valve seat (38b) which is stationary relative to the valve housing (2), and further comprising a solenoid device (13) for initiating the switchover movement, the solenoid device (13) comprising a control unit (16) which is stationary relative to the valve housing (2) and which contains a coil device (22) to which a current can be applied, and which comprises an armature element (14) which is axially movable relative thereto and designed as a part of the drive section (25) of the valve member (7), comprising the following process step:
(a) the provision of a closing section (27) with a rigid annular base body (28) supporting the two sealing sections (36a, 36b), the sealing sections (36a, 36b) being deformable in a rubber-elastic way, **characterised by** the following process steps:
(b) the coaxial pressing of the closing section (27) with its base body (28) onto the drive section (25) by means of a pressing force (F_{P}) in a state in which the drive section (25) with its armature element (14) is supported on the control unit (16) in an axially immovable way,
(c) the termination of the pressing-on process when the base body (28) adopts an axial position relative to the drive section (25) supported on the control unit (16) in an axially immovable way, in which position it bears against the valve housing (2) with a stop face (43) formed on the end face having the second sealing section (36b), and in which position the collar-shaped second valve seat (38b) is pushed into the second sealing section (36b), which is deformable in a rubber-elastic way, and
(d) the removal of the pressing force, so that the valve member (7), under the influence of the elasticity of the second sealing section (36b), is moved towards the first switching position while the drive section (25) moves away from the control unit (16).

14. Method according to claim 13, **characterised in that** the pressing force (F_{P}) for press-fitting the closing section (27) is introduced into the closing section (27) by means of a valve seat support (45) supporting the first valve seat (38a) and separate from the valve housing (2), the valve seat support (45) being axially adjustable relative to the valve housing (2).

15. Method according to claim 14, **characterised in that** the valve seat support (45) is, following the press-fitting of the closing section (27) on the drive section (25), moved away from the second valve seat (38b) relative to the valve housing (2) against the pressing-on direction, until the two opposite valve seats (38a, 38b) adopt a mutual axial distance which predetermines the switchover distance of the valve member (7).

## Revendications

1. Dispositif de soupape, comprenant un carter de soupape (2), dans lequel est disposé un organe de soupape (7) pouvant être commuté entre une première position de commutation et une deuxième position de commutation en exécutant un mouvement de commutation (6) linéaire dans une direction axiale, lequel organe de soupape présente une section d'obturation (27) présentant une forme annulaire, laquelle est disposée de manière coaxiale sur une section d'entraînement (25) de l'organe de soupape (27) et qui est pourvue d'une première et d'une seconde section d'étanchéification (36a, 36b) disposées au niveau de côtés frontaux (35a, 35b) opposés et s'éloignant l'une de l'autre, ladite section d'obturation reposant, dans la première position de commutation, par la première section d'étanchéification (36a), au niveau d'un premier siège de soupape (38a) en forme de col stationnaire par rapport au carter de soupape (2) et reposant, dans une deuxième position de commutation, par la deuxième section d'étanchéification (36b) au niveau d'un deuxième siège de soupape (38b) en forme de col faisant face au premier siège de soupape (38a) à une certaine distance axiale, stationnaire par rapport au carter de soupape (2), et comprenant également un dispositif électromagnétique (13) servant à provoquer le mouvement de commutation (6), qui est pourvu d'une unité de commande (16), stationnaire par rapport au carter de soupape (2) et contenant un dispositif de bobines (22) pouvant être alimenté en courant, et d'un élément d'ancrage (14) mobile axialement par rapport à l'unité de commande et réalisé comme élément constitutif de la section d'entraînement (25) de l'organe de soupape (7), sachant que la section d'obturation (27) de l'organe de soupape (7) présente un corps de base (28) rigide, de forme annulaire, qui supporte les deux sections d'étanchéification (36a, 36b) réalisées de manière déformable élastiquement, **caractérisé en ce que** la section d'obturation (27) est fixée, par son corps de base (28), par ajustage serré, sur la section d'entraînement (25) et prend ce faisant, par rapport à la section d'entraînement (25), une telle position relative axiale que simultanément alors que l'élément d'ancrage (14) prend appui contre l'unité de commande (16) du dispositif électromagnétique (13), le corps de base (28) de la section d'obturation (27) repose, par une surface de butée (43), qui est réalisée au niveau du côté frontal (35b) présentant la deuxième section d'étanchéification (36b) et est orientée axialement, au niveau du carter de soupape (2), et **en ce que** le deuxième siège de soupape (38b) en forme de col est enfoncé dans la deuxième section d'étanchéification (36b) déformable élastiquement.

2. Dispositif de soupape selon la revendication 1, **caractérisé en ce que** la surface de butée (43) est disposée, par rapport à l'axe longitudinal central (12) de l'organe de soupape (7), radialement à côté de la deuxième section d'étanchéification (36b) et se trouve de manière appropriée radialement en dehors de la deuxième section d'étanchéification (36b).

3. Dispositif de soupape selon la revendication 2, **caractérisé en ce que** la surface de butée (43) est réalisée de manière à présenter une forme annulaire et est disposée de manière concentrique par rapport à l'axe longitudinal central (12), sachant que le dispositif de soupape s'appuie, lorsqu'il repose au niveau du carter de soupape (2), au niveau d'une surface de butée complémentaire (44), de préférence de forme annulaire, du carter de soupape (2).

4. Dispositif de soupape selon l'une quelconque des revendications 1 à 3, **caractérisé en ce que** l'unité de commande (16) présente un dispositif de guidage de flux (17) pour le flux magnétique comprenant au moins une surface polaire (18) tournée vers l'élément d'ancrage (14), sachant que l'élément d'ancrage (14) repose au niveau de la surface polaire (18), lorsque le corps de base (28) repose, par sa surface de butée (43), au niveau du carter de soupape (2) et sachant que l'élément d'ancrage (14) est disposé, dans chaque position de commutation prise lors du fonctionnement du dispositif de soupape (1), à une certaine distance (« a ») par rapport à la surface polaire (18) au moins au nombre de une.

5. Dispositif de soupape selon l'une quelconque des revendications 1 à 4, **caractérisé en ce que** le premier siège de soupape (38a) est réalisé au niveau au moins d'un support de siège de soupape (45) pouvant être déplacé axialement par rapport au carter de soupape (2) lors de l'assemblage du dispositif de soupape (1), ledit support de siège de soupape pouvant être fixé ou étant fixé de manière immobile axialement par rapport au carter de soupape (2).

6. Dispositif de soupape selon la revendication 5, **caractérisé en ce que** le support de siège de soupape (45) est réalisé de manière à présenter une forme de manchon et renferme de manière coaxiale une section d'extrémité axiale de la section d'entraînement (25), ladite section d'extrémité étant disposée sur le côté de la première section d'étanchéification (36a).

7. Dispositif de soupape selon la revendication 5 ou 6, **caractérisé en ce que** le premier siège de soupape (38a) est réalisé au niveau du côté frontal, tourné vers la section d'obturation (27), du support de siège de soupape (45).

8. Dispositif de soupape selon l'une quelconque des revendications 5 à 7, **caractérisé en ce que** le support de siège de soupape (45) est inséré, en particulier est vissé, de manière coaxiale dans un alésage de réception (9) du carter de soupape (2), dans lequel s'étend également l'organe de soupape (7).

9. Dispositif de soupape selon l'une quelconque des revendications 5 à 8, **caractérisé en ce que** le support de siège de soupape (45) présente, en plus du premier siège de soupape (38a) en forme de col, une autre surface de butée (48) faisant face au corps de base (28) de la section d'obturation (27) et tournée axialement vers ce dernier, sachant que le premier siège de soupape (38a) peut être enfoncé, lors de l'assemblage du dispositif de soupape (1), par déplacement axial du support de siège de soupape (45), dans la première section d'étanchéification (36a) jusqu'à ce que l'autre surface de butée (48) repose au niveau du corps de base (28) de la section d'obturation (27), ledit corps de base s'appuyant par sa surface de butée (43) au niveau de carter de soupape (2).

10. Dispositif de soupape selon l'une quelconque des revendications 1 à 9, **caractérisé en ce que** ledit dispositif de soupape présente des moyens formant ressort (24), qui précontraignent l'organe de soupape (7) en permanence en direction de la première position de commutation de telle manière que l'organe de soupape (7) prend la première position de commutation lorsque le dispositif électromagnétique (13) est désactivé.

11. Dispositif de soupape selon l'une quelconque des revendications 1 à 10, **caractérisé en ce que** la force d'attraction exercée sur l'organe de soupape (7) par le dispositif électromagnétique (13) lors de son activation est moins importante qu'une force, qui est nécessaire pour presser le corps de base (28) de la section d'obturation (27), par sa surface de butée (43), contre le carter de soupape (2).

12. Dispositif de soupape selon l'une quelconque des revendications 1 à 11, **caractérisé en ce que** ledit dispositif de soupape est réalisé sous la forme d'une soupape à plusieurs voies présentant une fonction de soupape à 3/2 voies, sachant que chaque siège de soupape (38a, 38b) encadre une ouverture de trop-plein (3a, 4a) faisant partie de deux canaux de soupape (3b, 4b) et sachant qu'une chambre de soupape (52) se trouvant entre les deux sièges de soupape (38a, 38b), dans laquelle est disposée de manière mobile axialement la section d'obturation (27), est reliée en permanence à un troisième canal de soupape (5b).

13. Procédé de fabrication d'un dispositif de soupape (1), qui présente un carter de soupape (2), dans lequel est disposé un organe de soupape (7) pouvant être commuté entre une première position de commutation et une deuxième position de commutation en exécutant un mouvement de commutation (6) linéaire dans une direction axiale, lequel organe de soupape présente une section d'obturation (27) présentant une forme annulaire, laquelle est disposée de manière coaxiale sur une section d'entraînement (25) de l'organe de soupape (7) et est pourvue d'une première et d'une seconde section d'étanchéification (36a, 36b) disposées au niveau de côtés frontaux (35a, 35b) opposés et s'éloignant l'une de l'autre, ladite section d'obturation reposant, dans la première position de commutation, par la première section d'étanchéification (36a), au niveau d'un premier siège de soupape (38a) en forme de col stationnaire par rapport au carter de soupape (2) et reposant, dans une deuxième position de commutation, par la deuxième section d'étanchéification (36b) au niveau d'un deuxième siège de soupape (38b) en forme de col faisant face au premier siège de soupape (38a) à une certaine distance axiale, stationnaire par rapport au carter de soupape (2), et qui présente également un dispositif électromagnétique (13) servant à provoquer le mouvement de commutation (6), pourvu d'une unité de commande (16), stationnaire par rapport au carter de soupape (2) et contenant un dispositif de bobines (22) pouvant être alimenté en courant, et d'un élément d'ancrage (14) mobile axialement par rapport à l'unité de commande et réalisé comme élément constitutif de la section d'entraînement (25) de l'organe de soupape (7),
lequel procédé comprend l'étape de procédé qui suit consistant à :
(a) fournir une section d'obturation (27), qui présente un corps de base (28) de forme annulaire, rigide supportant les deux sections d'étanchéification (36a, 36b), sachant que les sections d'étanchéification (36a, 36b) sont réalisées de manière déformable élastiquement, **caractérisé par** les étapes de procédé qui suivent consistant à :
(b) presser de manière coaxiale la section d'obturation (27), par son corps de base (28), sur la section d'entraînement (25) au moyen d'une force de pression (Fp) dans un état, dans lequel la section d'entraînement (25) s'appuie de manière immobile axialement, par son élément d'ancrage (14), au niveau de l'unité de commande (16),
(c) mettre fin au processus de pression, lorsque le corps de base (28) prend, par rapport à la section d'entraînement (25) s'appuyant de manière immobile axialement contre l'unité de commande (16), une position relative axiale, dans laquelle il repose au niveau du carter de soupape (2) par une surface de butée (43), qui est réalisée au niveau du côté frontal présentant la deuxième section d'étanchéification (36b) et dans laquelle, en outre, le deuxième siège de soupape (38b) en forme de col est enfoncé dans la deuxième section d'étanchéification (36b) déformable élastiquement, et
(d) arrêter l'application de la force de pression de sorte que l'organe de soupape (7) se déplace, sous l'action de l'élasticité de la deuxième section d'étanchéification (36b), en direction de la première position de commutation et que la section d'entraînement (25) s'éloigne ce faisant de l'unité de commande (16).

14. Procédé selon la revendication 13, **caractérisé en ce que** la force de pression (Fp) est appliquée pour presser la section d'obturation (27), au moyen d'un support de siège de soupape (45) supportant le premier siège de soupape (38a) et réalisé séparément par rapport au carter de soupape (2), dans la section d'obturation (27), sachant que le support de siège de soupape (45) est réalisé de manière à pouvoir être déplacé axialement par rapport au carter de soupape (2).

15. Procédé selon la revendication 14, **caractérisé en ce que** le support de siège de soupape (45) est éloigné du deuxième siège de soupape (38b) après avoir pressé la section d'obturation (27) sur la section d'entraînement (25) à l'encontre de la direction d'application de la pression par rapport au carter de soupape (2) sur une distance telle que les deux sièges de soupape (38a, 38b) se faisant face s'écartent l'un de l'autre selon une distance axiale prédéfinissant la course de commutation de l'organe de soupape (7).
